# EUROPEAN PATENT APPLICATION

(11) **EP 3 537 307 A1**
(43) Date of publication of application: **11.09.2019**
(21) Application number: 18877304.8
(22) Date of filing: 09.01.2018
(51) Int. Cl.: G06F 13/40

(54) **METHOD FOR HANDLING I2C BUS DEADLOCK, ELECTRONIC DEVICE, AND COMMUNICATION SYSTEM**

(71) Applicant: Shenzhen Goodix Technology Co., Ltd., Shenzhen, Guangdong 518045 (CN)
(72) Inventor: LI, Qingbin, Shenzhen, Guangdong 518045 (CN); CHEN, Dekun, Shenzhen, Guangdong 518045 (CN); YU, Weiying, Shenzhen, Guangdong 518045 (CN)
(74) Representative: Herrero & Asociados, S.L.
(86) International application number: PCT/CN2018/071926
(87) International publication number: WO 2019/136595

(57) **Abstract**

A method of processing deadlock of an I2C bus, an electronic device and a communication system are disclosed, the method includes: setting, by the mater device, a serial data line SDA of the I2C bus to be in a floating state when the I2C bus is in the deadlock state (S110); and controlling, by the master device, a serial clock line SCL in the I2C bus to successively output at least n+1 clocks after the SDA is set to in a floating state, the at least n+1 clocks are used to control the SDA by the slave device to proceed to perform data transmission, and n is a data bit width of the I2C bus (S120). The method is beneficial for resuming normal transmission of data in a case that the I2C bus is in a deadlock state.

## Description

### TECHNICAL FIELD

The present application relates to the field of communications, and in particular, to a method for processing deadlock of an I2C bus, an electronic device and a communication system.

### BACKGROUND

Due to a defect of an I2C (Inter-Integrated Circuit) bus protocol, it is possible to cause an I2C bus to enter a deadlock state when an I2C master device is abnormally reset (such as a watchdog reset, a chip reset caused by an abnormity of an on-board power supply, a manual reset), thereby causing the device to fail to complete normal transmission.

### SUMMARY

In view of this, embodiments of the present application provide a method of processing deadlock of an I2C bus and a device, which are beneficial for resuming normal transmission of data in a case that the I2C bus is in a deadlock state.

In a first aspect, provided is a method of processing deadlock of an I2C bus, where the I2C bus is configured for communication between a master device and a slave device, and the method includes: setting, by the mater device, a serial data line SDA of the I2C bus to be in a floating state in a case that the master device determines that the I2C bus is in a deadlock state; and controlling, by the master device, a serial clock line SCL of the I2C bus to successively output at least (n+1) clocks after the master device sets the SDA to be in a floating state, where the at least (n+1) clocks are used to control the SDA by the slave device to proceed to perform data transmission, and n is a data bit width of the I2C bus.

In a case that the mater device determines that the I2C bus is in the deadlock state, the SDA is controlled by setting the SDA to be in a floating state and controlling the SCL to successively output the at least (n+1) clocks, so that the I2C bus can relieve the deadlock, thereby resuming normal transmission of a device. In one possible design, n=8^{∗}m, and m is a positive integer. Optionally, n=8, that is, the master device can complete unlocking of the I2C bus as long as it controls the SCL to output 9 clocks.

In one possible design, the method further includes: detecting, by the master device, states of the SCL and the SDA after the master device is reset; and determining, by the master device, that the I2C bus is in the deadlock state if the SCL is at a high level and the SDA is at a low level.

In one possible design, after the controlling, by the master device, the SCL to successively output the at least (n+1) clocks, the method further includes: controlling, by the master device, the SCL and the SDA to output stop signals.

In a second aspect, provided is an electronic device, configured to perform the method according to the first aspect or any possible implementation manner of the first aspect. Particularly, the electronic device may include units configured to perform the method according to the first aspect or any possible implementation manner of the first aspect.

In a third aspect, provided is an electronic device, including a memory and a processor, where the memory is configured to store a computer program, the processor is configured to call the computer program from the memory and run the computer program, and the processor performs the method according to the foregoing first aspect or any possible implementation manner of the first aspect when the program is run.

In a fourth aspect, provided is a communication system, including the electronic device according to the second aspect or any possible implementation manner of the second aspect and a slave device, where the electronic device is a master device, and the master device communicates with the slave device via an I2C bus.

In a fifth aspect, provided is a computer readable medium, configured to store a computer program, where the computer program includes instructions for performing the method according to the first aspect or any possible implementation manner of the first aspect.

In a sixth aspect, provided is a computer program product including instructions which, when run on a computer, cause the computer to perform the method of the foregoing first aspect or any one of optional implementation manners of the first aspect.

These and other aspects of the present application will be clearer and easier to understand from the following description of the embodiments.

### BRIEF DESCRIPTION OF DRAWINGS

FIG. 1 shows a typical I2C bus interface circuit structure.
FIG. 2 shows a complete data transmission timing sequence of an I2C bus.
FIG. 3 shows a schematic block diagram of a method of processing deadlock of an I2C bus according to an embodiment of the present application.
FIG. 4 shows a schematic flowchart of a method of processing deadlock of an I2C bus according to an embodiment of the present application.
FIG. 5 shows a schematic block diagram of an electronic device according to an embodiment of the present application.
FIG. 6 shows another schematic block diagram of an electronic device according to an embodiment of the present invention.

### DESCRIPTION OF EMBODIMENTS

A clear and complete description of technical solutions provided in the embodiments of the present application will be given below, in conjunction with the accompanying drawings in the embodiments of the present application.

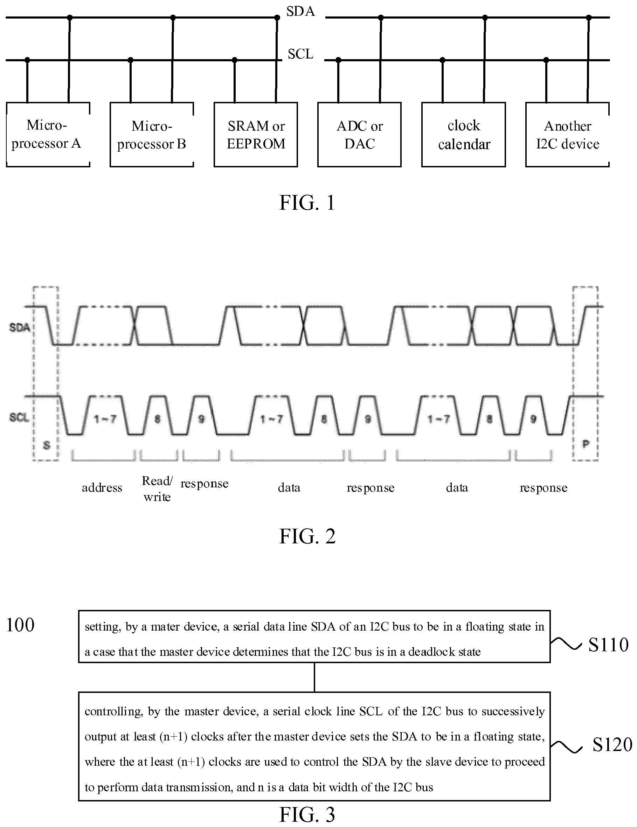

An I2C bus is a serial bus composed of a serial data line (Serial Data Line, SDA) and a serial clock line (Serial Clock Line, SCL), and can transmit and receive data. The I2C bus is a bus for a plurality of devices, that is, it may connect more than one device capable of controlling a bus to the bus. As shown in FIG. 1, a microcontroller A, a microcontroller B, a static random access memory (Static Random Access Memory, SRAM) or an electrically-erasable programmable read-only memory (Electrically-Erasable Programmable Read-Only Memory, EEPROM), an analog to digital converter (Analog to Digital Converter, ADC) or a digital to analog converter (Digital to Analog Converter, DAC), a clock calendar and another I2C peripheral device can be connected to an I2C bus; in a process of information transmission, each device connected in parallel to the I2C bus may be either a master device (or a slave device), or a transmitting device (or a receiving device), which depends on a function to be completed by the device. Each device connected to the I2C bus connects an SDA and an SCL to a positive power supply voltage via a current source or a pull-up resistor, and these two signal lines are at a high level when the bus is idle. Since the SDA and the SCL of each device are in a line "and" relationship, a low level output by any one of the devices connected to the bus will cause a level of a signal of the bus to be low.

For ease of understanding, some definitions in an I2C protocol and a working timing sequence of an I2C bus are firstly introduced below.

In I2C bus communication, a bus timing sequence generally includes an idle signal, a start signal, a data signal, a response signal and a stop signal. When two signal lines of an SDA and an SCL of an I2C bus are at a high level at the same time, it is specified as an idle state of the bus. In this case, output stage field effect transistors of various devices are in a cut-off state, that is, the bus is released, and the level is pulled up by respective pull-up resistors of the two signal lines. In a period during which the SCL is at a high level, a change of the SDA from a high level to a low level indicates a start signal; and in a period during which the SCL is at a high level, a change of the SDA from a low level to a high level indicates a stop signal. A transmitting device transmits one byte each time, and a receiving device feeds a response signal back. When the response signal is at a low level, it is specified as a valid acknowledgement bit (ACK), which indicates that the receiving device has successfully received the byte; and when the response signal is at a high level, it is specified as a non-acknowledgement bit (NACK), which generally indicates that the receiving device fails to receive the byte. When the I2C bus performs data transmission, in a period during which a clock signal is at a high level, data on the SDA necessarily remain stable; and a high level state or a low level state of the data line is allowed to change only in a period during which a signal on the SCL is at a low level.

FIG. 2 shows a complete data transmission timing sequence of an I2C bus. Firstly, a master device controls SCL and SDA signals to generate a start signal (S), and then transmits an 8-bit slave address signal; and the last bit of the address signal indicates whether this operation is a read operation (at a high level) or a write operation (at a low level). A slave device matching the address on the I2C bus makes an acknowledgement for a 9th clock cycle. If it is a write operation, the master device controls the SCL and SDA signals, and outputs an 8-bit data signal, and then the slave device makes an acknowledgement, which indicates that the data write operation has been completed normally. If it is a read operation, the master device controls the SCL to generate a clock pulse, the slave device controls the SDA to output correct 8-bit data, and then the master device makes an acknowledgement, which indicates that the data read operation has been completed normally. Finally, the master device controls the SCL and the SDA to generate an end signal (P), which indicates that this operation ends; or a new start signal (S) is generated, and data transmission for a next frame starts.

Under a normal circumstance, the I2C bus protocol can ensure normal read and write operations of a bus; however, it is possible to cause generation of deadlock of an I2C bus when an I2C master device is abnormally reset (such as a watchdog reset, a chip reset caused by an abnormity of an on-board power supply, a manual reset). The reasons for generation of deadlock mainly include the following two aspects.

1) When the I2C master device performs a read/write operation, the slave device is in a phase of outputting an acknowledgement signal (the SDA signal is at a low level); if the master device has an abnormal reset at this moment, the SCL will always be at a high level; and in a case that the slave device is not reset, it will continue to make an acknowledgement (the SDA is always at a low level) until the SCL changes to be at a low level to end the acknowledgement. However, for the I2C master device, after it is reset, the SCL and SDA signals would be detected, and if it is found that the SDA signal is at a low level, it would be considered that the I2C bus is occupied and the I2C master device would wait for the SCL and SDA signals to change to be at a high level; and the I2C slave device would remain the SDA to be at a low level since the I2C slave device has not received a pull-down operation of the master device for the SCL signal, the I2C master device and the I2C slave device wait for each other, and the bus enters a deadlock state.

2) When the I2C master device performs a read operation, the I2C slave device outputs data after making an acknowledgement, and the output data bit is exactly 0; and if the I2C master device is abnormally reset at this moment, the same situation as 1) will occur, thereby causing the I2C bus to enter a deadlock state.

In a case of comprehensively considering the foregoing two types of deadlock, an embodiment of the present application provides a method of processing deadlock of an I2C bus, so that the I2C bus can relieve the deadlock, thereby resuming normal transmission of a device.

FIG. 3 shows a schematic block diagram of a method 100 of processing deadlock of an I2C bus according to an embodiment of the present application. The I2C bus is configured for communication between a master device and a slave device, and as shown in FIG. 3, the method 100 includes some or all of the following contents:
S110, the mater device sets a serial data line SDA of the I2C bus to be in a floating state in a case that the master device determines that the I2C bus is in the deadlock state; and
S120, the master device controls a serial clock line SCL of the I2C bus to successively output at least (n+1) clocks after the master device sets the SDA to be in a floating state, where the at least (n+1) clocks are used to control the SDA by the slave device to proceed to perform data transmission, and n is a data bit width of the I2C bus.

Particularly, since the master device is reset under a working condition, the master device does not know whether a current operation is that the master device reads data from the slave device or the master device writes data to the slave device; assuming that the current operation is that the master device reads data from the slave device, that is, the master device is in a state of receiving data, the master device cannot control the SDA, and thus the SDA is necessarily in a floating state. When the master device determines that the I2C bus is in the deadlock state, the master device may first set the SDA to be in a floating state, further, the master device may control the SLC to output at least (n+1) clocks, and the slave device may proceed to perform data transmission under the control of the at least (n+1) clocks output by the master device.

A technical solution of the embodiment of the present application will be described in detail below, in conjunction with the foregoing reasons why the I2C bus generates deadlock. A first specific reason for generation of deadlock mainly lies in that the slave device pulls the SDA down, and since the master device is abnormally reset, the slave device is in a phase of outputting an acknowledgement signal. In the case of this type of deadlock, the master device may require only one pull-down SCL signal to cause the slave device to release the bus. When receiving the clock falling edge to complete a response phase, the slave device can release the bus, the SDA is pulled up to be at a high level by a pull-up resistor, and the bus may be controlled by the master device to proceed to perform transmission after the slave device releases the bus.

A second specific reason for generation of deadlock lies in that the slave device is in a data output phase, data output by the slave device is 0, and since the master device is abnormally reset, the slave device fails to complete transmission of a current bit and always pulls the SDA down. In the case of this type of deadlock, the master device requires a plurality of clocks to complete this read operation so as to release the bus after the data transmission is completed. Optionally, in the embodiment of the present application, the master device may successively transmit a plurality of clocks to actively guide the slave device to release the bus. Since one read operation may require successively outputting n (n is determined by a data bit width of the I2C bus) data bits and one ACK bit, or the master device can also directly transmit a stop signal to end the flow without transmitting an ACK, the SCL bus requires at least transmitting n clocks to complete this data transmission, and further the master device can control the I2C bus to output one stop signal to end the data transmission flow.

In combination with the foregoing two types of deadlock, a possible application scenario is: when the master device reads the slave device and is waiting for an ACK signal of the slave device after transmitting a read command, the master device has an abnormal reset, and the I2C bus enters a deadlock state (the first type of deadlock). In this case, the master device requires transmitting a clock to unlock ACK first, the slave device will proceed to transmit data at this time, and if the transmitted data is 0, then the I2C bus enters a deadlock state again (the second type of deadlock).

Therefore, according to the method of processing deadlock of an I2C bus according to the embodiment of the present application, in a case that a mater device determines that the I2C bus is in the deadlock state, an SDA is controlled by setting the SDA to be in a floating state and controlling an SCL to successively output at least (n+1) clocks, which is beneficial for relieving the deadlock of the I2C bus, thereby resuming normal transmission of a device. It can be known from the foregoing analysis that, in a case that the master device determines that the I2C bus is in the deadlock state, the master device can control the SCL to output one clock to unlock under the circumstance of generation of the first type of deadlock, and the master device requires to control the SCL to output a plurality of clocks under the circumstance of generation of the second type of deadlock; since the master device does not know the reasons for generation of deadlock when the mater device has a reset, and is unclear about the state of data transmission before the reset (that is, whether the slave device is in a phase of outputting a response or in a data transmitting state, and what bit is transmitted), in order to ensure that this data operation can be completed, the embodiment of the present application proposes that the master device can control the SCL to successively output at least (n+1) clocks, and n is a data bit width of the I2C bus. For the slave device, after this data operation is completed, there may be extra clocks; however, there is a pull-up resistor on the SDA bus, when ports of the master device and the slave device are in a floating state, and the SDA will be pulled up to be at a high level, therefore, the extra clocks will be parsed into clock signals of ACK by the slave device after the unlocking is complete. In this case, since the SDA is at a high level, the master device can assume that a NACK would not make a data response.

Optionally, n is generally greater than or equal to 8, for example, n is a multiple of 8.

Optionally, in the embodiment of the present application, after the master device controls the SCL to successively output the at least (n+1) clocks, the method further includes: controlling, by the master device, the SCL and the SDA to output stop signals.

Optionally, in the embodiment of the present application, the method further includes: detecting, by the master device, states of the SCL and the SDA after the master device is reset; and determining, by the master device, that the I2C bus is in the deadlock state if the SCL is at a high level and the SDA is at a low level.

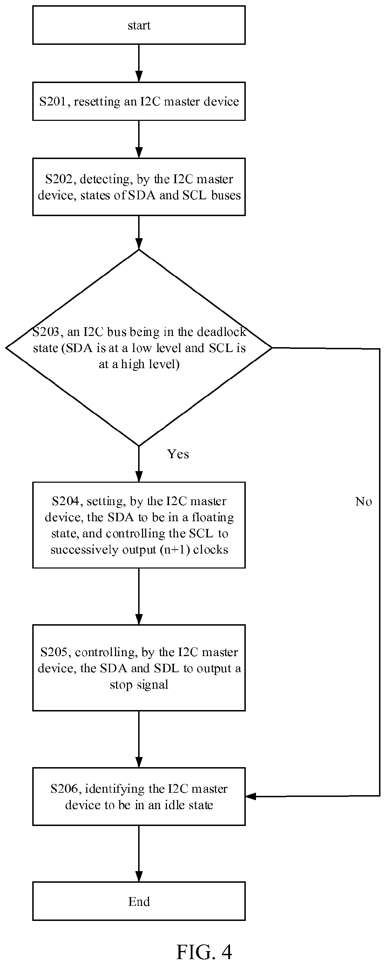

Hardware control flows of a method 200 of processing deadlock of an I2C bus according to an embodiment of the present application will be described in detail below, in conjunction with FIG. 4. As shown in FIG. 4, the method 200 is mainly composed of three flows: firstly, a master device detects a state of a bus after being reset; then, the master device guides devices to resume a data operation flow by actively transmitting clocks; finally, the master device transmits an end signal to complete the data operation flow. The specific implementation flows include the followings:
S201, an I2C master device is reset;
S202, the master device detects a state of a bus, that is, an SDA signal line and an SCL signal line are detected;
S203, the master device determines whether an I2C bus is in a deadlock state, and if it is determined that the I2C bus is not in the deadlock state, it directly goes to S206;
S204, if it is determined in S203 that the I2C bus is in the deadlock state, the SDA signal line is set to be in a floating state, and the SCL is controlled to successively output (n+1) clocks;
S205, the SDA signal line and the SCL signal line are controlled to output an end signal; and
S206, the master device is identified as an idle state.

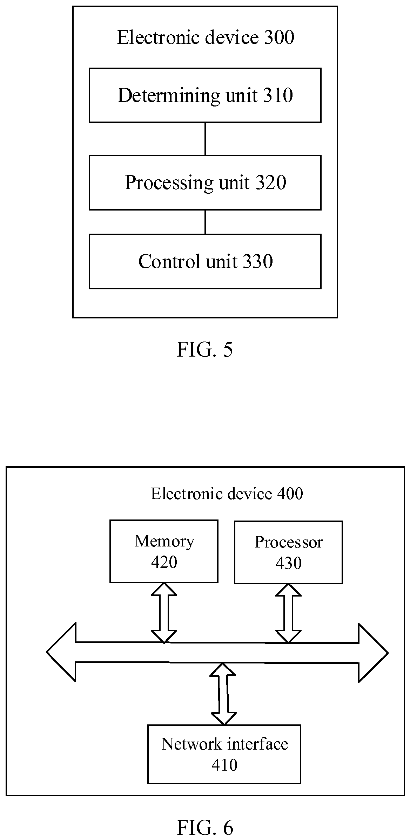

FIG. 5 shows a schematic block diagram of an electronic device 300 according to an embodiment of the present application. As show in FIG. 5, the electronic device is a master device, the device communicates with a slave device via a built-in integrated circuit I2C bus, and the electronic device 300 includes:
a determining unit 310 configured to determine that the I2C bus between the master device and the slave device is in a deadlock state;
a processing unit 320 configured to set a serial data line SDA of the I2C bus to be in a floating state in a case that the determining unit determines that the I2C bus is in the deadlock state; and
a control unit 330 configured to control a serial clock line SCL of the I2C bus to successively output at least (n+1) clocks after the processing unit sets the SDA to be in the floating state, where the at least (n+1) clocks are used to control the SDA by the slave device to proceed to perform data transmission, and n is a data bit width of the I2C bus.

Therefore, according to the electronic device of the embodiment of the present application, in a case that it is determined that an I2C bus is in a deadlock state, an SDA is controlled by setting an SDA to be in a floating state and controlling an SCL to successively output at least (n+1) clocks, which is beneficial for relieving the deadlock of the I2C bus, thereby resuming normal transmission of a device.

Optionally, in the embodiment of the present application, n=8^{∗}m, and m is a positive integer. Optionally, in the embodiment of the present application, the electronic device further includes: a detecting unit configured to detect states of the SCL and the SDA after the master device is reset; and the determining unit is specifically configured to: determine that the I2C bus is in the deadlock state if the SCL detected by the detecting unit is at a high level and the SDA detected by the detection unit is at a low level.

It should be understood that, the electronic device 300 according to the embodiment of the present invention may correspond to the master device in the method embodiment of the present application, and the foregoing and other operations and/or functions of various modules in the electronic device 300 are respectively used to implement corresponding flows of respective methods in FIG. 3 and FIG. 4, and will not be repeated redundantly herein for concision.

FIG. 6 shows a schematic block diagram of an electronic device 400 according to an embodiment of the present application. The electronic device is a master device, the device communicates with a slave device via a built-in integrated circuit I2C bus, and as shown in FIG. 6, the electronic device 400 includes: a network interface 410, a memory 420 and a processor 430; the network interface includes a receiving interface and/or a transmitting interface configured to receive or transmit data; the memory is configured to store instructions; and the processor is configured to: determine that the I2C bus between the master device and the slave device is in a deadlock state; set a serial data line SDA of the I2C bus to be in a floating state when it is determined that the I2C bus is in the deadlock state; and control a serial clock line SCL of the I2C bus to successively output at least (n+1) clocks after the SDA is set to be in the floating state, where the at least (n+1) clocks are used to control the SDA by the slave device to proceed to perform data transmission, and n is a data bit width of the I2C bus.

Therefore, according to the electronic device of the embodiment of the present application, in a case that it is determined that an I2C bus is in a deadlock state, an SDA is controlled by setting an SDA to be in a floating state and controlling an SCL to successively output at least (n+1) clocks, which is beneficial for relieving the deadlock of the I2C bus, thereby resuming normal transmission of a device.

It should be understood that, in the embodiment of the present invention, the processor 430 may be a CPU, the processor 430 may also be another general-purpose processor, a digital signal processor (Digital Signal Processor, DSP), an application specific integrated circuit (Application Specific Integrated Circuit, ASIC), a field programmable gate array (Field Programmable Gate Array, FPGA) or another programmable logic device, a discrete gate or a transistor logic device, a discrete hardware component or the like. The general-purpose processor may be a microprocessor or the processor may be any conventional processor or the like.

The memory 420 may include a read-only memory and a random access memory, and provides instructions and data for the processor 430. A part of the memory 420 may further include a non-volatile random access memory. For example, the memory 420 may further store information about a type of a device.

In an implementation process, each content of the foregoing method may be completed by an integrated logic circuit of hardware or instructions in a software form in the processor 430. A content of a method disclosed in an embodiment of the present invention may be directly executed by a hardware processor, or executed by a combination of hardware and a software module in a processor. The software module may be located in a mature storage media in the art, such as a random access memory, a flash memory, a read-only memory, a programmable read-only memory or an electrically erasable programmable memory, a register. The storage medium is located in the memory 420, and the processor 430 reads information in the memory 420 and completes the content of the foregoing method in combination with hardware thereof. They are not described in detail herein in order to avoid repetition.

In a specific embodiment, a determining unit, a processing unit, a control unit and a detecting unit in the electronic device 300 may be implemented by the processor 430 in FIG. 6

An embodiment of the present application further provides a communication system, where the communication system includes the foregoing electronic device 300 and a slave device, the electronic device 300 is a master device, and the master device communicates with the slave device via a built-in integrated circuit I2C bus.

Those of ordinary skill in the art may be aware that, units and circuits of the examples described in the embodiments disclosed in this description may be implemented by electronic hardware, computer software, or a combination of the two. Whether these functions are performed by hardware or software depends on specific applications and design constraint conditions of the technical solutions. Those skilled may implement the described functions by using different methods for each specific application, but this implementation should not be considered to be beyond the scope of the present application.

In the several embodiments provided in the present application, it should be understood that, the disclosed circuits, branches and units may be realized in other manners. For example, the branches described above are exemplary, e.g., the division of the units is merely a logic function division, other division manners may exist in practical implementation, for example, a plurality of units or components may be combined or integrated to another branch, or some features may be omitted or not implemented.

If the integrated unit is implemented in the form of a software functional unit and is sold or used as an independent product, it may be stored in a computer readable storage medium. Based on such understanding, the technical solutions of the present application substantially, or the part of the present disclosure making contribution to the prior art, or a part of the technical solutions may be embodied in the form of a software product, and the computer software product is stored in a storage medium, which includes multiple instructions enabling computer equipment (which may be a personal computer, a server, network equipment or the like) to execute all of or part of the steps in the methods of the embodiments of the present application. The foregoing storage medium includes a variety of media capable of storing program codes, such as a USB disk, a mobile hard disk, a read-only memory (Read-Only Memory, ROM), a random access memory (Random Access Memory, RAM), a magnetic disk, an optical disk.

Described above are the specific embodiments of the present application only, but the protection scope of present application is not limited thereto, those skilled who are familiar with the art could readily think of variations or substitutions within the technical scope disclosed by the present application, and these variations or substitutions shall fall within the protection scope of the present application. Therefore, the protection scope of the present application should be determined with reference to the protection scope of the claims.

## Claims

1. A method of processing deadlock of an I2C bus, wherein the I2C bus is configured for communication between a master device and a slave device, and the method comprises:
setting, by the mater device, a serial data line SDA of the I2C bus to be in a floating state, when a deadlock state of the I2C bus is determined by the master device; and
controlling, by the master device, a serial clock line SCL of the I2C bus to successively output at least (n+1) clocks, wherein the at least (n+1) clocks are used to control the SDA by the slave device to proceed to perform data transmission, and n is a data bit width of the I2C bus.

2. The method according to claim 1, wherein n=8^{∗}m, and m is a positive integer.

3. The method according to claim 1 or 2, wherein the method further comprises:
detecting, by the master device, states of the SCL and the SDA after the master device is reset; and
determining, by the master device, that the I2C bus is in the deadlock state if the SCL is at a high level and the SDA is at a low level.

4. The method according to any one of claims 1 to 3, wherein after the controlling, by the master device, the SCL to successively output the at least (n+1) clocks, the method further comprises:
controlling, by the master device, the SCL and the SDA to output stop signals.

5. An electronic device, wherein the electronic device is a master device, the device communicates with a slave device via an I2C bus, and the electronic device comprises:
a determining unit configured to determine the I2C bus between the master device and the slave device is in a deadlock state;
a processing unit configured to set a serial data line SDA of the I2C bus to be in a floating state when the determining unit determines the I2C bus is in the deadlock state ; and
a control unit configured to control a serial clock line SCL of the I2C bus to successively output at least (n+1) clocks after the processing unit sets the SDA to be in the floating state, wherein the at least (n+1) clocks are used to control the SDA by the slave device to proceed to perform data transmission, and n is a data bit width of the I2C bus.

6. The electronic device according to claim 5, wherein n=8^{∗}m, and m is a positive integer.

7. The electronic device according to claim 5 or 6, wherein the electronic device further comprises:
a detecting unit configured to detect states of the SCL and the SDA after the electronic device is reset; and
the determining unit is specifically configured to:
determine that the I2C bus is in the deadlock state if the SCL detected by the detecting unit is at a high level and the SDA detected by the detection unit is at a low level.

8. The electronic device according to any one of claims 5 to 7, wherein the control unit is further configured to:
control the SCL and the SDA to output stop signals after controlling the SCL to output the at least (n+1) clocks.

9. A communication system, wherein the communication system comprises the electronic device according to any one of claims 5 to 8 and a slave device, the electronic device is a master device, and the master device communicates with the slave device via an I2C bus.
